# EUROPEAN PATENT APPLICATION

(11) **EP 2 938 046 A1**
(43) Date of publication of application: **28.10.2015**
(21) Application number: 14305606.7
(22) Date of filing: 24.04.2014
(51) Int. Cl.: H04L 29/08

(54) **Method for providing content to communication equipment via a mobile backhaul with an information-centric network (ICN) deployed as an overlay over IP and in-network caches**

(71) Applicant: ALCATEL LUCENT, 92100 Boulogne-Billancourt (FR)
(72) Inventor: Gallo, Massimo, 91620 Nozay (FR); Carofiglio, Giovanna, 91620 Nozay (FR); Perino, Diego, 91620 Nozay (FR); Muscariello, Luca, 92290 Chatenay Malabry (FR)
(74) Representative: Hirsch & Associés

(57) **Abstract**

In a method for providing content requested by items of communication equipment (1₁-1₄) via a mobile network (2) comprising a mobile backhaul (3₁-3₃) with backhaul nodes (4₁-4₁₀), the method comprises a step in which, when a content is requested by an item of communication equipment (1₂), an Information-Centric Networking header, containing an identifier of this requested content, is added to a message requesting this content, after which this message with the additional Information-Centric Networking header is routed into the mobile backhaul (3₁-3₃) according to this content identifier up until it reaches a backhaul node (4₁) having access to a content cache (5) storing this requested content, after which the latter is transmitted to the requesting communication equipment (1₂) by means of content packets, each comprising this additional Information-Centric Networking header and routed into the mobile backhaul (3) according to this content identifier.

## Description

### FIELD OF THE INVENTION

The present invention relates to mobile networks comprising a mobile backhaul arranged for transporting content requested by items of communication equipment.

### BACKGROUND OF THE INVENTION

In recent years, broadband access penetration and rich web services development have stimulated user demand, notably in the mobile segment. As a result, traffic is constantly increasing and its growth is mainly driven by content services dissemination, and notably video-centric.

The content-centric nature of current Internet usage has turned the network into a medium that makes it possible to connect people with content. But this highlights inefficiencies of the host-centric communication model, and notably its difficulties in dynamic content-to-location binding, mobility management, multicast, or multi-homing.

As a consequence, Mobile Network Operators (or MNOs) must carry out significant infrastructure investments to guarantee high quality connectivity and better user Quality of Experience (QoE). But as a counterpart, profitability of mobile broadband services will have to increase significantly for network operators.

At the same time, web services and content providers generate high data volumes which require infrastructure improvements and therefore an increase in network cost.

In recent mobile networks, the mobile backhaul (which is a nationwide infrastructure interfacing user terminals with the core network) is unresponsive to content dissemination, and therefore to user traffic. Some of the deployed mobile backhauls comprise IP/Ethernet routers organized in a hierarchical topology and arranged for forwarding traffic between backhaul end-points that may be equipped with additional elements in charge of specific data and control plane functionalities. In such mobile backhauls, user traffic is encapsulated using GPRS Tunnel Protocol (GTP, GTP User Plane, GTP-U) between e-Node Bs (which are radio terminations of the operator's network), Serving Gateways (or SGWs) and Packet Data Network Gateways (or PDN-GWs).

Unfortunately, most of the existing backhaul infrastructures suffer from a lack of mechanisms for dynamic and flexible traffic control. Indeed, there is a transparent use of the mobile backhaul imposed by the 3GPP standard (via IP tunneling from an e-Node B to a SGW, mainly for mobility management), and current application layer solutions are of a connection-oriented nature with use of a connection-oriented transport model (e.g. HTTP). As a consequence, the mobile backhaul is used as a passive network segment where traffic congestion is suffered and which is not dynamically managed.

To improve the situation it has been proposed to integrate content caches in GTP tunnel endpoints (PDN GWs or e-Node Bs), because caching features within the mobile backhaul cannot be implemented without breaking the mobility management model standardized at 3GPP and based on protocol anchors in the PDN-GWs and GTP tunnels. But, the improvement is not sufficient.

### SUMMARY OF THE INVENTION

An aim of this invention is to improve the situation by introducing a networking paradigm, named Information-Centric Networking (or ICN), directly in the mobile backhaul, for exploiting content identifiers (or names) instead of interface addresses to enable user-to-content communications.

To this effect the invention proposes notably a method intended for providing content requested by items of communication equipment via a mobile network comprising a mobile backhaul with backhaul nodes, and comprising a step in which, when a content is requested by an item of communication equipment, an Information-Centric Networking header containing an identifier of this requested content is added to a message requesting this content, after which the message with the additional Information-Centric Networking header is routed into the mobile backhaul according to this content identifier up until reaching a backhaul node having access to a content cache storing this requested content, after which the latter is transmitted to the requesting communication equipment by means of content packets, each comprising the additional Information-Centric Networking header and routed into the mobile backhaul according to this content identifier.

Thanks to content-awareness carried by content identifiers, the network is able to route requests toward nearest content replicas by exploiting temporary in-network caches and adaptive request routing. As a consequence, the created protocol substrate allows management of traffic growth and matching of this traffic with the minimum required resources for a given QoS, and the content-awareness allows mobile network operators to better manage their resources.

According to one embodiment, the additional Information-Centric Networking header is added into a GPRS Tunnel Protocol - U header of the message requesting the content and of each content packet to be transmitted.

According to another embodiment, the additional Information-Centric Networking header is added after an Internet Protocol header, with a specific Information-Centric Networking protocol type value, of the message requesting the content and of each content packet to be transmitted.

In a further embodiment, the additional Information-Centric Networking header is added by a proxy-server that is co-located with an e-Node B defining a backhaul node of the mobile backhaul and to which the requesting communication equipment is connected, and the additional Information-Centric Networking header is retrieved by the proxy-server from each content packet before being transmitted to the requesting communication equipment.

In still a further embodiment, the additional Information-Centric Networking header is added by an application that is running into the requesting communication equipment and that is aware of an Information-Centric Networking substrate.

According to one embodiment at least one of the backhaul nodes that defines an e-Node B, has access to a server comprising a content cache.

In a further embodiment, at least one of the backhaul nodes that defines a Packet Data Network Gateway has access to a server comprising a content cache.

Preferably, in the case where the requested content cannot be retrieved from the mobile backhaul, the message with the additional Information-Centric Networking header is routed to a backhaul node that defines a Packet Data Network Gateway of the mobile backhaul and is coupled to a content delivery network server aware of an Information-Centric Networking substrate and arranged to retrieve the requested content.

The invention also provides a computer program product comprising a set of instructions arranged, when it is executed by processing means, for performing a method such as the one above introduced to provide content requested by items of communication equipment, via a mobile network comprising a mobile backhaul with backhaul nodes.

The invention also provides a backhaul node for a mobile backhaul of a mobile network to which may be connected items of communication equipment, the backhaul node being arranged whereby, when a content is requested by one of the items of communication equipment, an Information-Centric Networking header, containing an identifier of the requested content, is added to a message requesting the content, so that the message with the additional Information-Centric Networking header be routed into the mobile backhaul according to the content identifier up until it reaches a backhaul node having access to a content cache storing the requested content.

This backhaul node may define an e-Node B that may, for instance, have access to a server that comprises a content cache storing content.

The invention also proposes a backhaul node for a mobile backhaul of a mobile network to which may be connected items of communication equipment, the backhaul node being arranged whereby, when it has received a content requested by one of the items of communication equipment, an Information-Centric Networking header, containing an identifier of the requested content is added to each packet containing a part of the received content before transmitting the packet to the requesting communication equipment via the mobile backhaul where it is routed according to the content identifier.

This backhaul node may define a Packet Data Network Gateway that may, for instance, have access to a server comprising a content cache storing content.

### BRIEF DESCRIPTION OF THE DRAWINGS

Other features and advantages of the invention will become apparent on examining the detailed specifications that follows in conjunction with the appended drawings, in which:
- figure 1 illustrates, schematically and functionally, an example of a mobile network comprising a core network connected to a mobile backhaul divided into three parts comprising backhaul nodes according to the invention and connected therebetween and to two external content delivery network servers,
- figure 2 illustrates, schematically and functionally, interactions between stacks of layers of items of communication equipment that are involved during a communication between a content application server and an item of communication equipment, in a first example of embodiment, and
- figure 3 illustrates, schematically and functionally, interactions between stacks of layers of items of communication equipment that are involved during a communication between a content application server and an item of communication equipment, in a second example of embodiment.

### DETAILED DESCRIPTION OF PREFERRED EMBODIMENTS

The invention sets out, notably, to provide a method intended for providing content requested by items of communication equipment 1ⱼ via a mobile network 2 comprising a mobile backhaul 3.

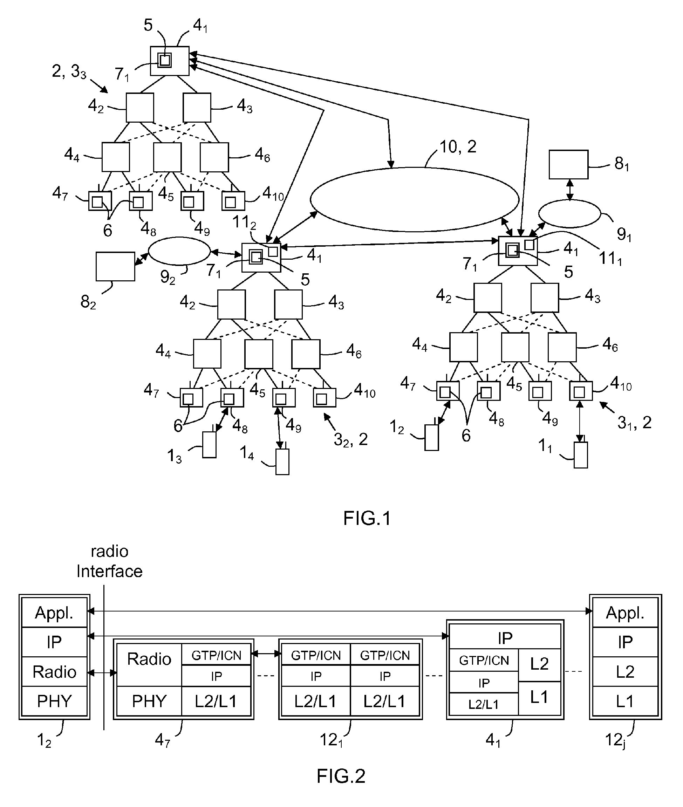

A non-limiting example of a mobile network 2 is illustrated in figure 1. In this example, the mobile network 2 comprises a core network 10 that is connected to a mobile backhaul 3 divided into three parts 3ᵢ (i = 1 to 3), each comprising backhaul nodes 4ₖ according to the invention. These three parts 3ᵢ of the mobile backhaul 3 are connected therebetween, and two of these three parts 3ᵢ (here 3₁ and 3₂) are connected respectively to two external content delivery network servers 8ₙ (n = 1 or 2), via two networks 9ₙ.

In the non-limiting example, the three parts 3ᵢ are identical and, for instance, associated respectively to three different regions (or areas). But this is not mandatory. Here, each part 3ᵢ presents a fat tree topology and comprises a backhaul node 4₁ defining a Packet Data Network Gateway (or PDN-GW) that is coupled to four backhaul nodes 4₇ to 4₁₀ defining e-Node Bs, via five backhaul nodes 4₂ to 4₆ defining routers.

The three PDN-GWs 4₁ are connected therebetween by a full mesh. Each PDN-GW 4₁ is the root of the fat tree topology in which the e-Node Bs 4₇ to 4₁₀ aggregate traffic generated by the items of mobile communication equipment 1ⱼ of users in adjacent cell radio sectors (or leaf nodes). For instance, cell radio sectors may be dimensioned so that every e-Node B serves the same average traffic demand (i.e. users are uniformly distributed over the different e-Node Bs 4₇ to 4₁₀). Network links in the fat tree topology are drawn in continuous or dotted lines when representing primary or secondary links. Secondary links are used only in case of failure in mobile backhaul 3.

Each part 3ᵢ comprises further a Serving Gateway (or SGW) 11₁ that is co-located with its PDN-GW 4₁ in this non-limiting example.

For instance, each external content delivery network (or CDN) server 8ₙ stores an entire copy of two catalogs of content. For instance each catalog may comprise approximately 10,000 content items, each having a size of 250 data chunks. In this case, users can request content items of any of the two catalogs.

The method according to the invention comprises a step that is performed each time content is requested by an item of communication equipment 1ⱼ. During this step an Information-Centric Networking (or ICN) header, containing an identifier of the requested content, is added to a message requesting this content, then this message with the additional Information-Centric Networking header is routed into the mobile backhaul 3 according to this content identifier up until it reaches a backhaul node 4ₖ that has access to a content cache 5 storing the requested content, after which the latter is transmitted to the requesting communication equipment 1ⱼ by means of content packets, each comprising the additional Information-Centric Networking header and routed into the mobile backhaul 3 according to the content identifier.

For instance, each content identifier may be a name.

ICN is deployed into the mobile backhaul 3 as an overlay over IP ("Internet Protocol") to enhance the backhaul data plane supporting ICN features (i.e. name-based forwarding and in-network packet-level caching). Since several items of communication equipment of the mobile backhaul 3 are based on programmable elements (e.g. network processors), it is possible to integrate ICN mechanisms via firmware upgrades, without installing any new ad-hoc hardware.

For instance, and as illustrated in the non-limiting example of figure 2, each additional ICN header may be added into a GPRS Tunnel Protocol - U (or GTP-U) header of a message requesting a content and of each content packet to be transmitted. The interpretation of this ICN extended header defined in the GTP-U encapsulation is not required by all intermediate backhaul nodes. If a backhaul node does not support ICN mechanisms it ignores this additional ICN extended header and forwards the message or content packet via the standard forwarding policy. Also, if a message or content packet does not contain this additional ICN extended header, the standard forwarding policy is applied.

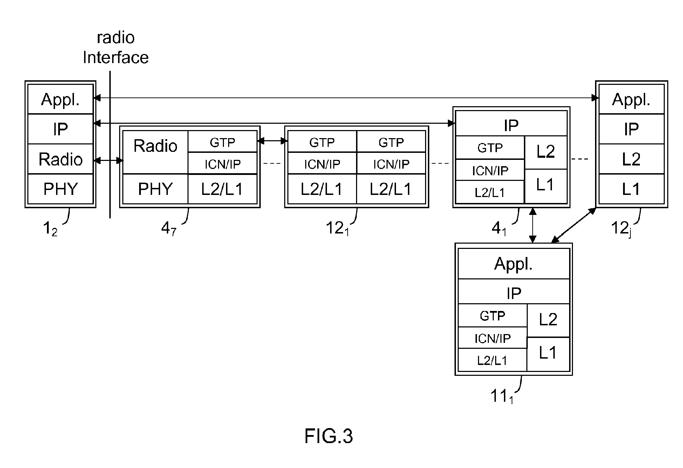

In a variant illustrated in the non-limiting example of figure 3, each additional ICN header may be added after an Internet Protocol (or IP) header, with a specific ICN protocol type value, of a message requesting content and of each content packet to be transmitted. If the ICN extended header is not present in a message or content packet or if a backhaul node 4ₖ does not support ICN mechanisms, the standard forwarding policy is applied.

The application server can be the original server that permanently stores the content objects, or the CDN server which in Fig. 1 is attached to the core network.

The content data retrieval process is driven by the user of the requesting communication equipment 1ⱼ via application-layer solutions (e.g. HTTP). As a consequence, there are at least two alternative approaches to introduce ICN transport model and to generate messages and content packets with an ICN header. These alternatives allows to keep existing packet headers used to perform low level forwarding between ICN-enabled backhaul nodes, and to preserve the 3GPP standard and all existing functions.

For instance and as illustrated in figure 1, each additional ICN header may be added to a message requesting a content by a proxy-server 6 that is co-located with an e-Node B 4ₖ to which the requesting communication equipment 1ⱼ is connected. In this case, this proxy-server 6 is arranged for retrieving the additional ICN header from each content packet received by its e-Node B 4ₖ before it is transmitted to the requesting communication equipment 1.

DPI and user key spoofing techniques can be used to decrypt user traffic, if encrypted, and to identify application-layer "content" messages (or requests) (e.g. HTTP GET).

In a variant not illustrated, each additional ICN header may be added to a message requesting content by an (ad-hoc) application that is running into the requesting communication equipment 1ⱼ and that is aware of an ICN substrate. This application is preferably of an ad-hoc type.

This second alternative is possible if the communication equipment 1ⱼ runs applications distributed by the content/CDN provider (e.g. video players). In such a configuration, it is the application's responsibility to retrieve content via ICN transport model and to generate messages containing an ICN header. In this case, when the e-Node B concerned encapsulates a user packet in a GTP-U packet, it does not include the ICN header in the encapsulation, but rather places it on top of the new IP header or in the GTP header, as explained above with reference to figures 2 and 3.

It is important to note that in both alternatives ICN is deployed as an overlay over IP, and the source/destination IP addresses of the messages and content packets correspond to the addresses of source/destination nodes in the ICN overlay. This implies that IP rewriting is performed by any ICN-enabled backhaul node.

Thanks to content-awareness carried by the content identifiers comprised into each additional ICN header, the mobile backhaul 3 is able to route messages (or requests) toward nearest content replicas, by exploiting temporary in-network caches 5 and adaptive request routing. As a consequence, the invention modifies the current backhaul data plane to introduce ICN functionalities. In particular, the invention creates the lacking protocol substrate for managing traffic growth and matching this traffic with the minimum required resources for a given QoS ("Quality of Service"), and brings a lacking content-awareness into the mobile network offering to mobile network operators (or MNOs) the capability to better manage their resources.

At least one of the backhaul nodes 4ₖ, that defines a PDN-GW 4₁, may have access to a server 7ᵢ that comprises a content cache 5, and/or at least one of the backhaul nodes 4ₖ, that defines an e-Node B 4₇ to 4₁₀, may have access to a server 7ᵢ that comprises a content cache 5.

In the non-limiting example illustrated in figure 1, a server 7ᵢ (comprising a content cache 5) is co-located into each PDN-GW 4₁. But in an alternative embodiment, a server 7ᵢ (comprising a content cache 5) could be co-located into each e-Node B 4₇ to 4₁₀.

Within the backhaul network 3 a requested content packet can be found in the local cache of any ICN-enabled backhaul node. As a consequence, every ICN-enabled backhaul node may be responsible for a periodical reporting to the control plane elements of the required statistics concerning served content packets, for policy enforcement and charging purposes. Ad-hoc GTP- Control Plane (or GTP-C) functions can be used to this aim.

If the requested content is not found inside the backhaul network 3, it may be retrieved from outside, and more precisely at the CDN servers 8ₙ that are respectively coupled to the PDN-GWs 4₁. These CDN servers 8ₙ are programmed to be aware of the ICN substrate, and thus to process messages containing ICN headers directly. In addition a CDN server 8ₙ can use standard CDN communication mechanisms to retrieve content from another CDN server outside the backhaul network 3.

The invention can also be considered in terms of a computer program product comprising a set of instructions arranged, when it is executed by processing means (and notably those comprised by the ICN-enabled backhaul nodes 4ₖ), for performing the method described above to provide content requested by items of communication equipment 1ⱼ, via the mobile network 2.

Thanks to the implementation of Information-Centric Networking (ICN) inside the mobile backhaul, we have a connectionless name-based transport model over IP which enables in-network caching in the backhaul nodes and multi-point to multi-point communications. This allows reducing not only the content delivery time with a significant improvement on user quality of Experience (QoE - essentially because of in-network caching (content is cached closer to the user) and of dynamic multipath transfer (faster download and finer adaptation (at packet-level) to available network resources)), but also the cost of providing content (as it decreases the bandwidth usage in the mobile backhaul). Moreover, using ICN into the mobile backhaul as an overlay over IP also provides high flexibility and adaptability to current traffic conditions due to its connectionless nature. As a consequence, it allows facing sudden variations of traffic load.

Obviously, the invention is not limited to the embodiments of the method, backhaul nodes and computer program product described above solely by way of example, but it encompasses all alternative embodiments which may be considered by one skilled in the art within the scope of the following claims.

## Claims

1. Method for providing content requested by items of communication equipment (1ⱼ) via a mobile network (2) comprising a mobile backhaul (3) with backhaul nodes (4ₖ), said method comprising a step in which, when a content is requested by an item of communication equipment (1ⱼ), an Information-Centric Networking header, containing an identifier of said requested content, is added to a message requesting said content, after which said message with the additional Information-Centric Networking header is routed into said mobile backhaul (3) according to said content identifier up until it reaches a backhaul node (4ₖ) having access to a content cache (5) storing said requested content, after which the latter is transmitted to said requesting communication equipment (1ⱼ) by means of content packets, each comprising said additional Information-Centric Networking header and routed into said mobile backhaul (3) according to said content identifier.

2. Method according to claim 1, wherein said additional Information-Centric Networking header is added into a GPRS Tunnel Protocol - U header of said message requesting said content and of each content packet to be transmitted.

3. Method according to claim 1, wherein said additional Information-Centric Networking header is added after an Internet Protocol header, with a specific Information-Centric Networking protocol type value, of said message requesting said content and of each content packet to be transmitted.

4. Method according to one of claims 1 to 3, wherein said additional Information-Centric Networking header is added by a proxy-server (6) that is co-located with an e-Node B defining a backhaul node (4ₖ) of said mobile backhaul (3) and to which said requesting communication equipment (1ⱼ) is connected, and said additional Information-Centric Networking header is retrieved by said proxy-server (6) from each content packet before being transmitted to said requesting communication equipment (1ⱼ).

5. Method according to one of claims 1 to 3, wherein said additional Information-Centric Networking header is added by an application that is running into said requesting communication equipment (1ⱼ) and that is aware of an Information-Centric Networking substrate.

6. Method according to one of claims 1 to 5, wherein at least one of said backhaul nodes (4ₖ), that defines an e-Node B, has access to a server comprising a content cache (5).

7. Method according to one of claims 1 to 6, wherein at least one of said backhaul nodes (4ₖ), that defines a Packet Data Network Gateway, has access to a server (7ᵢ) comprising a content cache (5).

8. Method according to one of claims 1 to 7, wherein, in the case where said requested content cannot be retrieved from said mobile backhaul (3), said message with the additional Information-Centric Networking header is routed to a backhaul node (4ₖ) that defines a Packet Data Network Gateway of said mobile backhaul (3) and is coupled to a content delivery network server (8ᵢ) aware of an Information-Centric Networking substrate and arranged to retrieve said requested content.

9. Computer program product comprising a set of instructions arranged, when it is executed by processing means, for performing the method according to one of claims 1 to 8 to provide content requested by items of communication equipment (1ⱼ), via a mobile network (2) comprising a mobile backhaul (3) with backhaul nodes (4ₖ).

10. Backhaul node (4ₖ) for a mobile backhaul (3) of a mobile network (2) to which may be connected items of communication equipment (1ⱼ), said backhaul node (4ₖ) being arranged whereby, when a content is requested by one of said items of communication equipment (1ⱼ), an Information-Centric Networking header, containing an identifier of said requested content, is added to a message requesting said content, so that said message with the additional Information-Centric Networking header be routed into said mobile backhaul (3) according to said content identifier up until it reaches a backhaul node (4ₖ) having access to a content cache (5) storing said requested content.

11. Backhaul node according to claim 10, wherein it defines an e-Node B.

12. Backhaul node (4₁) for a mobile backhaul (3) of a mobile network (2) to which may be connected items of communication equipment (1ⱼ), said backhaul node (4₁) being arranged whereby, when it has received a content requested by one of said items of communication equipment (1ⱼ), an Information-Centric Networking header, containing an identifier of said requested content is added to each packet containing a part of said received content before transmitting said packet to said requesting communication equipment (1ⱼ) via said mobile backhaul (3) where it is routed according to said content identifier.

13. Backhaul node according to claim 12, wherein it defines a Packet Data Network Gateway
